# EUROPÄISCHE PATENTSCHRIFT

(11) **EP 4 179 188 B1**
(45) Veröffentlichungstag und Bekanntmachung des Hinweises auf die Patenterteilung: **18.09.2024**
(21) Anmeldenummer: 21735647.6
(22) Anmeldetag: 22.06.2021
(51) Int. Cl.: F01N 3/20, F01N 3/28, F01N 13/00, B01F 23/10, B01F 25/452

(54) **ABGASNACHBEHANDLUNGSVORRICHTUNG**
EXHAUST GAS TREATMENT DEVICE
DISPOSITIF DE TRAITEMENT DE GAZ D'ÉCHAPPEMENT

(30) Priorität: 10.07.2020 DE 102020118232
(43) Veröffentlichungstag der Anmeldung: 17.05.2023
(73) Patentinhaber: MAN Truck & Bus SE, 80995 München (DE)
(72) Erfinder: HEINDL, Thomas Martin, 80995 München (DE); ZIPPEL, Markus, 80995 München (DE)
(74) Vertreter: v. Bezold & Partner Patentanwälte - PartG mbB
(86) Internationale Anmeldenummer: PCT/EP2021/066902
(87) Internationale Veröffentlichungsnummer: WO 2022/008225

(56) Entgegenhaltungen:
- DE-A1- 102006 024 199
- DE-A1- 102015 015 505
- US-A1- 2008 264 023
- US-A1- 2019 331 016

## Beschreibung

Die Erfindung betrifft eine Abgasnachbehandlungsvorrichtung insbesondere zur Reduzierung von Stickoxidemissionen in Abgas.

US 2019/0331016 A1 offenbart ein Abgassystem für ein Arbeitsfahrzeug umfassend eine Baugruppe zur selektiven katalytischen Reduktion (SCR), die ein SCR-Modul umfasst. Das SCR-Modul umfasst einen ersten Abgasströmungsweg und einen zweiten Abgasströmungsweg. Die SCR-Anordnung umfasst außerdem einen Einlass, der dazu konfiguriert ist, einen Strom einer Abgaslösung aufzunehmen, einen ersten Teil der Abgaslösung zum ersten Abgasströmungsweg zu leiten und einen zweiten Teil der Abgaslösung zum zweiten Abgasströmungsweg zu leiten. Die SCR-Anordnung umfasst weiterhin einen Auslassmischer, der so konfiguriert ist, dass er den ersten und zweiten Teil der Abgaslösung empfängt und den ersten und zweiten Teil der Abgaslösung aus der SCR-Anordnung leitet. Der Auslassmischer umfasst eine oder mehrere Funktionen, die zum Mischen des ersten und zweiten Teils der Abgaslösung konfiguriert sind.

DE 10 2015 015 505 A1 offenbart ein Nachbehandlungsmodul zur Verwendung mit einer Kraftmaschine. Das Nachbehandlungsmodul kann ein Einlassgehäuse, das zumindest teilweise einen Einlassdurchgang für das Abgas festlegt, und zumindest einen Mischer, der in dem Einlassdurchgang vorgesehen ist, aufweisen. Das Nachbehandlungsmodul kann auch ein Auslassgehäuse, das zumindest teilweise einen Auslassdurchgang für das Abgas festlegt, und ein Katalysatorgehäuse, das lösbar zwischen dem Einlassgehäuse und dem Auslassgehäuse verbunden ist, aufweisen. Das Nachbehandlungsmodul kann ferner mehrere Katalysatorsubstrate aufweisen, die dazu ausgebildet sind, in dem Katalysatorgehäuse montiert zu werden, das Abgas von dem Einlassdurchgang parallel aufzunehmen und das Abgas zu dem Auslassgehäuse parallel abzugeben.

DE10 2006 024 199 A1 offenbart ein Verwirbelungselement für eine Abgasanlage, mit einem Substrat, das eine Vielzahl von Strömungskanälen aufweist und dafür vorgesehen ist, stromabwärts einer Vorrichtung zur Einbringung eines Zusatzstoffes angeordnet zu werden.

Um die aktuellen Abgasnormen bei Dieselmotoren einzuhalten, werden sogenannte SCR-Systeme (englisch: Selective Catalytic Reduction) zur Minimierung der Stickoxidemissionen verwendet. Hierbei wird vor dem SCR-Katalysator eine wässrige Harnstofflösung in den Abgasstrom eingesprizt, die sich auf der Wegstrecke bis zum Katalysatoreintritt in Ammoniak umwandelt. Im SCR-Katalysator reagiert das Ammoniak mit den Stickoxiden zu Stickstoff und Wasser.

Aufgrund z. B. variabler Motordrehzahlen und Motorlasten kommt es zu starken Schwankungen im Abgasstrom. Durch z. B. Umlenkungen des Abgasstroms resultiert hieraus eine sich stark ändernde Inhomogenität des Geschwindigkeitsprofils und zum Teil auch der Ammoniakkonzentration. Aufgrund unterschiedlicher Verweilzeiten und Ammoniakkonzentrationen im SCR-Katalysator verlässt das Abgas den SCR-Katalysator daher meist mit unterschiedlichen Stickoxidkonzentrationen. Ein NOx-Sensor stromab des SCR-Katalysatorausgangs kann daher die NOx-Konzentration üblicherweise nur ungenau erfassen.

Um ein präzises Messsignal zu erhalten, wird z. B. versucht, den NOx-Sensor so weit wie möglich vom SCR-Katalysatorausgang zu positionieren, sodass sich das Abgas auf der Strecke bis zum NOx-Sensor durchmischen kann.

Eine Aufgabe der Erfindung ist es, eine alternative und/oder verbesserte Abgasnachbehandlungsvorrichtung bereitzustellen, insbesondere eine Abgasnachbehandlungsvorrichtung, mit der NOx-Konzentrationen stromab eines SCR-Katalysators mit hoher Messgenauigkeit bestimmbar sind.

Diese Aufgabe kann mit den Merkmalen des unabhängigen Anspruchs gelöst werden. Vorteilhafte Weiterbildungen der Erfindung können den Unteransprüchen und der folgenden Beschreibung entnommen werden.

Die Erfindung betrifft eine Abgasnachbehandlungsvorrichtung, vorzugsweise für ein Kraftfahrzeug, insbesondere ein Nutzfahrzeug (z.B. Omnibus oder Lastkraftwagen).

Die Abgasnachbehandlungsvorrichtung dient vorzugsweise zur Reduzierung, insbesondere Minimierung, von Stickoxidemissionen (z. B. Stickstoffoxidemissionen und/oder NOx-Emissionen) in Abgas und z. B. zur Integration in einen Abgastrakt eines Kraftfahrzeugs.

Die Abgasnachbehandlungsvorrichtung umfasst einen SCR-Katalysator und einen Sensor stromab des SCR-Katalysators.

Der Sensor ist vorzugsweise ein Stickoxidsensor (zweckmäßig NOx-Sensor) und zwar insbesondere zur Bestimmung (z. B. Messung) einer Stickoxidkonzentration im Abgas.

Ferner umfasst die Abgasnachbehandlungsvorrichtung ein Abgaselement (vorzugsweise ein Abgasmisch- und/oder Abgashomogenisierungselement) zur Durchmischung und/oder Homogenisierung (insbesondere Strömungshomogenisierung) von Abgas und zwar insbesondere von Abgas, das bereits durch den SCR-Katalysator behandelt wurde.

Der insbesondere als Stickoxidsensor (auch als NOx-Sensor bezeichnet) ausgebildete Sensor dient insbesondere zum Bestimmen (z. B. Messen) der Stickoxidkonzentration des Abgases. Der Stickoxidsensor misst die Stickoxidkonzentration vorzugsweise nur punktuell, sodass für eine genaue Messung eine möglichst homogene Stickoxidverteilung und ein möglichst homogenes Strömungsprofil vorteilhaft ist.

Die Erfindung zeichnet sich insbesondere dadurch aus, dass das Abgaselement zwischen dem SCR-Katalysator und dem Sensor angeordnet ist und eine (z. B. flexible und/oder verformbare) Drahtstruktur umfasst. Vorzugsweise ist das Abgaselement als Drahtstruktur ausgebildet. Die Drahtstruktur ist vorzugsweise eine Metalldrahtstruktur.

Übliche Mischelemente verwirbeln den Abgasstrom. Durch die Wirbel wird das Abgas im Bereich stromabwärts der Mischelemente durchmischt. Die Erzeugung der Wirbel wird meist durch Leit- und Störelemente, z. B. Flügelelemente, erzeugt, die sich negativ auf den Druckverlust auswirken und zu keiner wesentlichen Homogenisierung führen. Eine Inhomogenität des Geschwindigkeitsprofils ist am Austritt der Mischelemente weiterhin vorhanden.

Ein Druckverlust, der durch die Drahtstruktur hervorgerufen wird, ist im Vergleich zu üblichen zweckmäßig statischen Mischern vorzugsweise deutlich geringer. Dies kann sich insbesondere positiv auf den Kraftstoffverbrauch auswirken.

Drahtstrukturen sind zudem aufgrund ihres Aufbaus bezüglich Schwingbelastungen vorteilhaft weit weniger gefährdet als übliche Mischer aus festen Strukturen.

Die Erzielung einer möglichst homogenen Stickoxidverteilung und/oder eines möglichst homogenen Geschwindigkeitsprofils kann insbesondere durch eine gezielt herbeigeführte Verwirbelung des Abgases an Drahtabschnitten der Drahtstruktur erreicht werden.

Das Abgaselement dient vorzugsweise zur Durchmischung des Abgases, um eine stromauf des Abgaselements vorhandene inhomogene Stickoxidverteilung im Abgas zu homogenisieren, sodass vorzugsweise die Inhomogenität zumindest reduziert oder vorzugsweise im Wesentlichen vollständig eliminiert werden kann. Dadurch kann zweckmäßig eine inhomogene Stickoxidverteilung stromauf des Abgaselements in eine zumindest im Wesentlichen homogene Stickoxidverteilung umgewandelt werden.

Das Abgaselement und somit insbesondere die Drahtstruktur kann in einem und/oder im Wesentlichen unmittelbar an einem Ausgang des SCR-Katalysators angeordnet sein.

Ferner kann das Abgaselement und somit z. B. die Drahtstruktur einen Strömungsquerschnitt des Ausgangs des SCR-Katalysators zumindest teilweise ausfüllen. Vorzugsweise kann das Abgaselement den Strömungsquerschnitt des Ausgangs des SCR-Katalysators im Wesentlichen vollständig ausfüllen, sodass es insbesondere über den im Wesentlichen gesamten Strömungsquerschnitt wirken kann, zweckmäßig auch z. B. in den radialen Randbereichen des Strömungsquerschnitts.

Die Drahtstruktur kann sich vorzugsweise bis in radiale Randbereiche des Ausgangs des SCR-Katalysators erstrecken.

Das Abgaselement wirkt somit insbesondere so, dass Ungleichverteilungen in der Stickoxidverteilung über den Strömungsquerschnitt des Ausgangs des SCR-Katalysators durch eine (vorzugsweise im Wesentlichen vollständige) Durchmischung des Abgasstroms zumindest reduziert werden, sodass nach dem Durchströmen des Abgases durch das Abgaselement eine möglichst homogene Stickoxidverteilung (über den vorzugsweise im Wesentlichen gesamten Querschnitt des SCR-Katalysatorausgangs) vorliegt.

Es ist hervorzuheben, dass eine gute Durchmischung des Abgases bereits während der Durchströmung des Abgaselements aus einer Drahtstruktur erreicht wird, das Abgas also bereits bei Austritt aus dem Abgaselement eine möglichst homogene Stickoxidverteilung vorweisen kann. Vorteilhaft weist das Abgas am Austritt des Abgaselements eine gute Homogenität auf, die weitgehend unabhängig von den Einflüssen am Eintritt des Abgaselements sein kann.

Eine lange Strömungsstrecke zwischen Ausgang SCR-Katalysator und Sensor kann somit vorteilhaft vermieden werden.

Es ist möglich, dass die Drahtstruktur zumindest ein Drahtgestrick oder zumindest ein Drahtgewebe umfasst.

Das Drahtgestrick ist vorzugsweise aus einem, besonders vorzugsweise einem einzigen, Metalldraht gestrickt. Die Drahtstruktur ist vorzugsweise aus einem Metallmaterial, insbesondere Edelstahl, ausgebildet. Die Drahtstruktur kann im Rahmen der Erfindung aber auch z.B. aus einem Kunststoffmaterial ausgebildet sein.

Zur Ausbildung des Abgaselements umfasst die Drahtstruktur ein aufgerolltes Band aus Drahtgestrick oder Drahtgewebe. Somit kann also ein aufgerolltes Band aus Drahtgestrick oder Drahtgewebe zur Ausbildung des Abgaselements dienen.

Das Band kann z.B. einen Gestrick- oder Gewebestreifen umfassen und/oder eine z.B. im Wesentlichen horizontal ausgerichtete und/oder im Wesentlichen ebene Ursprungsform aufweisen.

Es ist insbesondere möglich, dass das Drahtgestrick einen Drahtgestrick-Schlauch umfasst. Der Drahtgestrick-Schlauch wird vorzugsweise zu einem Band flach gedrückt und das Band wird aufgerollt, um so das Abgaselement auszubilden.

Es ist möglich, dass auf das Band eine, vorzugsweise lineare, Prägung aufgebracht ist und die Prägung z. B. relativ zu einer Aufrollrichtung des Bands schräg und/oder nicht senkrecht ausgerichtet ist. Eine z.B. senkrecht zur Aufrollrichtung des Bands ausgerichtete Prägung ist nachteilhaft, da beim Aufrollen des Bands Prägeerhöhungen ineinander fallen können.

Die Prägung kann z.B. ein im Wesentlichen Schräg-Muster, V-Muster (insbesondere Pfeil-Muster) oder im Wesentlichen W-Muster ausbilden, insbesondere zur Erhöhung der Stabilität bei z.B. breiten Bändern.

Die Prägung ist vorzugsweise als Prägewellung ausgeführt.

Zur Erzielung einer möglichst gleichmäßigen Durchmischung des Abgases kann das Abgaselement z.B. eine im Wesentlichen gleichmäßige Dichte und/oder eine im Wesentlichen homogene Struktur aufweisen.

Das Band kann hierzu z.B. im Gegenschlag aufgerollt sein, zweckmäßig so, dass zumindest zwei übereinander angeordnete Lagen des Bands zweckmäßig von einem Bandende aus gemeinsam aufgerollt sind.

Das Band kann im aufgerollten Zustand z.B. einzelne Lagen bilden und es ist z.B. möglich, dass die einzelnen Lagen Prägungen vorzugsweise mit unterschiedlicher und/oder entgegengesetzter Ausrichtung aufweisen.

Bei einem Aufrollen des Bands im Gegenschlag wird das Band zuerst auf vorzugsweise ungefähr halber Länge zumindest einmal zurückgeschlagen und daraufhin die zumindest zwei Lagen gemeinsam aufgerollt. Somit können Prägeerhöhungen einzelner aufgerollter Lagen des Bands eine unterschiedliche, insbesondere entgegengesetzte, Ausrichtung aufweisen und somit zweckmäßig nicht mehr ineinander fallen, wodurch vorzugsweise ein Abgaselement mit im Wesentlichen gleichmäßiger Dichte und/oder einer im Wesentlichen homogenen Struktur ausgebildet werden kann.

Bei einem Aufrollen des Bands im Gleichschlag wird das Band in nur einer Lage von einem Bandende aus aufgerollt, so dass Prägeerhöhungen einzelner aufgerollter Lagen des Bands die gleiche Ausrichtung aufweisen und dadurch ineinander fallen können.

Vorzugsweise sind im aufgerollten Zustand des Bands zwei offene Enden des Bands an Außenseiten des Bands angeordnet, z.B. um 180° +/-40°, +/-30° oder +/-20° versetzt zueinander, so dass z.B. das Abgaselement einen im Wesentlichen symmetrischen Randbereich aufweist.

Es ist allerdings auch möglich, dass im aufgerollten Zustand des Bands zwei offene Enden des Bands (vorzugsweise im Wesentlichen zentral) innerhalb des Bands angeordnet sind, so dass z.B. das Abgaselement einen unsymmetrischen Randbereich aufweist.

Es ist möglich, dass das Abgaselement als Verwirbelungseinrichtung wirkt, so dass Verwirbelungen des Abgases an Drahtabschnitten der Drahtstruktur für die Durchmischung des Abgases und/oder die Homogenisierung der inhomogenen Stickoxidverteilung sorgen können.

Eine Abgasströmung am Austritt des Abgaselements kann somit z.B. eine Vielzahl an vorzugsweise kleinen Wirbeln aufweisen. Alternativ oder ergänzend kann eine Abgasströmung am Austritt des Abgaselements stärker verwirbelt sein als am Eintritt des Abgaselements. Trotz oder gerade eben wegen der Verwirbelungen kann eine homogene Stickoxidverteilung ermöglicht werden.

Es ist möglich, dass Drahtabschnitte des Drahtgestricks in Wirrlage und/oder hintereinander zweckmäßig in einem beliebigen Winkel kreuzend angeordnet sind, so dass vorzugsweise das Abgas während der Durchströmung des Abgaselements mehrfach umgelenkt wird. Die Umlenkung kann in vorzugsweise allen drei Raumrichtungen erfolgen.

Es ist möglich, dass Drahtabschnitte zumindest zweier Drahtgewebelagen hintereinander zweckmäßig in einem beliebigen Winkel kreuzend angeordnet sind, so dass vorzugsweise das Abgas während der Durchströmung des Abgaselements mehrfach umgelenkt wird. Die Umlenkung kann in vorzugsweise allen drei Raumrichtungen erfolgen.

Es ist möglich, dass der SCR-Katalysator, das Abgaselement und/oder der Sensor in einer Umlenkgehäusekonstruktion (z. B. einer Gehäusebox) zum vorzugsweise mehrfachen Umlenken des Abgases angeordnet ist. Die Umlenkgehäusekonstruktion ist insbesondere ausgebildet, um in einen Abgastrakt integriert werden zu können und kann z. B. einen Eingang zum Anschließen an ein Abgas-Eingangsohr und einen Ausgang zum Anschließen an ein Abgas-Ausgangsrohr aufweisen. Allerdings kann der SCR-Katalysator, das Abgaselement und/oder der Sensor z. B. in einer Rohrkonstruktion zweckmäßig hintereinander angeordnet sein.

Die Ausgangs- und/oder Umlenkkammer kann z. B. unmittelbar an den Ausgang des SCR-Katalysators anschließen.

Die Umlenkgehäusekonstruktion kann z. B. ausgebildet sein, um das Abgas um zumindest 160°, zumindest 170°, zumindest 180°, zumindest 190°, zumindest 240°, zumindest 250°, zumindest 260° oder zumindest 270° umzulenken. Das kann z. B. durch die Wandgeometrie der Umlenkgehäusekonstruktion und/oder ein oder mehrere Umlenkelemente in der Umlenkgehäusekonstruktion realisiert werden.

Es ist möglich, dass die Umlenkgehäusekonstruktion und zwar insbesondere die Ausgangs- und/oder Umlenkkammer stromab des Abgaselements eine Kollisionswand aufweist, gegen die das Abgas aus dem Abgaselement z. B. kollidieren kann und vorzugsweise in Richtung des Sensors umgelenkt werden kann. Die Kollisionswand kann vorzugsweise im Wesentlichen gegenüber des Abgaselements angeordnet sein.

Der Sensor kann zweckmäßig innerhalb der Umlenkgehäusekonstruktion vorzugsweise an einer Position angeordnet sein, an der Abgas in und vorzugsweise mittels der Umlenkgehäusekonstruktion bereits umgelenkt wurde, vorzugsweise um zumindest im Wesentlichen 90°.

Der Sensor ist vorzugsweise an und/oder in der Umlenk- und/oder Ausgangskammer angeordnet ist.

Ein Abgas-Einlassquerschnitt der Umlenkgehäusekonstruktion kann z. B. größer sein als ein Abgas-Auslassquerschnitt der Umlenkgehäusekonstruktion. Alternativ oder ergänzend kann z. B. ein Strömungsquerschnitt der Umlenkgehäusekonstruktion und zwar z. B. ein Strömungsquerschnitt der Ausgangs- und/oder Umlenkkammer sich zum Sensor hin (z. B. im Wesentlichen trichterförmig) verjüngen.

Die Ausgangs- und/oder Umlenkkammer kann vorzugsweise im Wesentlichen unmittelbar an den Ausgang des SCR-Katalysators anschließen.

Das Abgaselement kann z. B. im Wesentlichen koaxial zum Ausgang des SCR-Katalysators angeordnet sein.

Die Abgasnachbehandlungsvorrichtung kann z. B. eine Schalldämpferkonstruktion sein.

Es ist möglich, dass das Abgaselement ausgebildet ist, um die Durchmischung und/oder Homogenisierung des Abgases während des Durchströmens des Abgaselements und/oder innerhalb des Abgaselements auszuführen, z. B. so dass das Abgas zweckmäßig am Austritt des Abgaselements bereits ausreichend durchmischt und/oder homogenisiert sein kann. Es kann somit eine im Wesentlichen vollständige Durchmischung und/oder Homogenisierung des Abgases bis zum Austritt des Abgaselements realisiert werden.

Übliche Mischer mit z.B. Flügeln beaufschlagen das Abgas so, dass eine Durchmischung erst stromab der Mischer und somit stromab der Flügel erfolgt.

Die Abgasnachbehandlungsvorrichtung kann ferner einen Reduktionsmittelinjektor stromauf des SCR-Katalysators umfassen. Der Reduktionsmittelinjektor dient zur Einleitung eines Reduktionsmittels, vorzugsweise einer wässrigen Harnstofflösung.

Im Kontext der Erfindung kann das Merkmal "homogenisieren" und/oder "homogen" vorzugsweise Ausführungsformen umfassen, bei denen eine Inhomogenität z. B. im Wesentlichen vollständig eliminiert wird, aber auch z. B. Ausführungsformen, bei denen eine Inhomogenität nur zweckmäßig wesentlich reduziert wird. Das Merkmal "homogenisieren" und/oder "homogen" ist somit vorzugsweise nicht auf eine vollständige Homogenisierung einer inhomogenen Stickoxidverteilung eingeschränkt. Zu erwähnen ist, dass das Drahtgestrick vorzugsweise im Wesentlichen homogen und/oder symmetrisch gewickelt sein kann.

Als Vorteile des insbesondere eine Drahtstruktur umfassenden Abgaselements können z. B. genannt werden:
Das Abgas weist vorzugsweise bereits am Austritt des Abgaselements eine gute Homogenität auf, die weitgehend unabhängig von den Einflüssen an dessen Eintritt ist.

Der Druckverlust, der durch das Abgaselement hervorgerufen wird, ist im Vergleich zu üblichen statischen Mischern deutlich geringer, was sich z. B. positiv auf den Kraftstoffverbrauch auswirkt.

Das Abgaselement ist aufgrund seines zweckmäßig flexiblen und/oder nachgiebigen Aufbaus bezüglich Schwingbelastungen weit weniger gefährdet als z. B. Mischer aus festen Strukturen.

Durch die vorzugsweise vielfachen Umlenkungen der Abgas-Strömung im Abgaselement kommt es zu einer im Wesentlichen vollständigen Durchmischung und/oder Homogenisierung des Abgases bis zum Austritt des Abgaselements.

Die Durchmischung erfolgt insbesondere durch eine gezielt herbeigeführte Verwirbelung des Abgases an Drähten des Abgaselements.

Die Erfindung umfasst auch ein Kraftfahrzeug, vorzugsweise ein Nutzfahrzeug (z. B. Omnibus oder Lastkraftwagen) mit einer Abgasnachbehandlungsvorrichtung wie hierin offenbart.

Die oben beschriebenen bevorzugten Ausführungsbeispiele und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsbeispiele der Erfindung in Verbindung mit den beigefügten Figuren.
- Figur 1: zeigt eine Ansicht einer Abgasnachbehandlungsvorrichtung gemäß einem Ausführungsbeispiel der Erfindung,
- Figur 2: zeigt einen Ausschnitt eines Abgaselements aus Drahtgestrick gemäß einem Ausführungsbeispiel,
- Figur 3: zeigt einen Ausschnitt eines Drahtgewebes zur Ausbildung eines Abgaselements gemäß einem Ausführungsbeispiel der Erfindung,
- Figur 4: zeigt einen Ausschnitt eines Drahtgestricks zur Ausbildung eines Abgaselements gemäß einem Ausführungsbeispiel der Erfindung,
- Figur 5: zeigt Ansichten eines Bands zur Ausbildung eines Abgaselements gemäß einem Ausführungsbeispiel der Erfindung,
- Figur 6: zeigt eine Ansicht eines aufgerollten Bands zur Ausbildung eines Abgaselements gemäß einem Ausführungsbeispiel der Erfindung,
- Figur 7: zeigt eine Ansicht eines aufgerollten Bands zur Ausbildung eines Abgaselements gemäß einem Ausführungsbeispiel der Erfindung,
- Figur 8: illustriert ein Verfahren zur Herstellung einer Prägung für ein Abgaselement gemäß einem Ausführungsbeispiel der Erfindung,
- Figur 9: zeigt unterschiedliche Ansichten einer Schrägprägung für ein Abgaselement gemäß einem Ausführungsbeispiel der Erfindung,
- Figur 10: zeigt unterschiedliche Ansichten einer V-Prägung für ein Abgaselement gemäß einem Ausführungsbeispiel der Erfindung, und
- Figur 11: zeigt unterschiedliche Ansichten einer W-Prägung für ein Abgaselement gemäß einem Ausführungsbeispiel der Erfindung.

Die in den Figuren gezeigten Ausführungsbeispiele stimmen teilweise überein, so dass identische oder ähnliche Teile mit den gleichen Bezugszeichen versehen sind, wobei zu deren Erläuterung auch auf die Beschreibung der anderen Ausführungsbeispiele verwiesen wird, um Wiederholungen zu vermeiden.

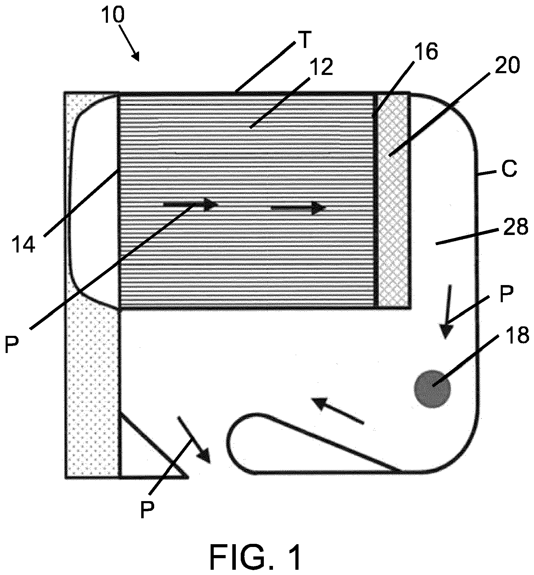

Figur 1 zeigt eine Ansicht einer Abgasnachbehandlungsvorrichtung 10 zur Reduzierung von Stickoxidemissionen (NOx-Emissionen) in Abgas gemäß einem Ausführungsbeispiel der Erfindung. Die Pfeile P kennzeichnen die Strömungsrichtung des Abgases durch die Abgasnachbehandlungsvorrichtung 10.

Die Abgasnachbehandlungsvorrichtung 10 umfasst einen SCR-Katalysator 12 und einen Sensor 18 stromab des SCR-Katalysators 12, vorzugsweise einen Stickoxidsensor (NOx-Sensor) 18 zur Bestimmung einer Stickoxidkonzentration des Abgases. Der Stickoxidsensor 18 bestimmt die Stickoxidkonzentration vorzugsweise nur punktuell, so dass eine Bestimmung der Stickoxidkonzentration in einer inhomogenen Stickoxidverteilung und zu einem ungenauen Ergebnis führen würde.

In die Abgasnachbehandlungsvorrichtung 10 ist deshalb zwischen Stickoxidsensor 18 und SCR-Katalysator 12 ein Abgaselement 20 zur Durchmischung und/oder Homogenisierung von durch den SCR-Katalysator 12 behandeltes Abgas eingebaut. Das Abgaselement 20 ist zweckmäßig aus einer Drahtstruktur, vorzugsweise einer Metalldrahtstruktur, ausgebildet.

Das Abgaselement 20 dient insbesondere dazu, um eine stromauf des Abgaselements 20 vorhandene inhomogene Stickoxidverteilung zu homogenisieren, sodass die Inhomogenität zumindest reduziert, vorzugsweise im Wesentlichen eliminiert werden kann, um eine präzise Messung der NOx-Konzentration im Abgas durch den Sensor 18 zu ermöglichen.

Das Abgaselement 20 ist vorzugsweise in und/oder im Wesentlichen unmittelbar an einem Ausgang 16 des SCR-Katalysators 12 angeordnet und zwar vorzugsweise im Wesentlichen koaxial ausgerichtet zum Ausgang 16 des SCR-Katalysators 12. Ferner füllt das Abgaselement 20 und somit insbesondere die Drahtstruktur einen Strömungsquerschnitt des Ausgangs 16 des SCR-Katalysators 16 vorzugsweise im Wesentlichen vollständig aus.

Das Abgaselement 20 und der Stickoxidsensor 18 sind vorzugsweise in einer Ausgangs- und/oder Umlenkkammer 28, die zweckmäßig im Wesentlichen unmittelbar am Ausgang 16 des SCR-Katalysators 12 anschließt, angeordnet.

Das Abgaselement 20 wirkt so, dass die inhomogene Stickoxidverteilung stromauf des Abgaselements 20 in eine über den Strömungsquerschnitt des Ausgangs 16 zumindest im Wesentlichen homogene Stickoxidverteilung umgewandelt werden kann.

Das Abgaselement 20 fungiert insbesondere als Verwirbelungseinrichtung, so dass die Durchmischung des Abgases und somit die Homogenisierung durch Verwirbelung des Abgases an Drahtabschnitten der Drahtstruktur erfolgt. Die Abgasströmung am Austritt des Abgaselements 20 weist somit eine Vielzahl an relativ kleinen Wirbeln auf. Es sind sogar Ausführungsbeispiele möglich, bei denen die Abgasströmung am Austritt des Abgaselements 20 stärker verwirbelt ist als am Eintritt des Abgaselements 20.

Ziel des Abgaselements 20 ist es also insbesondere, Ungleichverteilungen in der Stickoxidverteilung über den Strömungsquerschnitt des Ausgangs 16 durch eine (z.B. im Wesentlichen vollständige) Durchmischung des Abgasstroms zu eliminieren, sodass nach dem Durchströmen des Abgaselements 20 eine möglichst homogene Stickoxidverteilung und/oder ein möglichst homogenes Abgas-Strömungsprofil über den vorzugsweise im Wesentlichen gesamten Strömungsquerschnitt des Ausgangs 16 vorliegt.

Dies kann insbesondere durch eine gezielt herbeigeführte Verwirbelung des Abgases an Drahtabschnitten der Drahtstruktur innerhalb des Abgaselements 20 erreicht werden. Die Drahtstruktur kann sich bis in radiale Randbereiche des Ausgangs 16 des SCR-Katalysators 12 erstrecken.

Um eine möglichst gleichmäßige Durchmischung des Abgases und somit eine möglichst homogene Stickoxidverteilung zu ermöglichen, ist das Abgaselement 20 mit einer im Wesentlichen gleichmäßigen Dichte und einer im Wesentlichen homogenen Struktur ausgeführt.

Die Drahtstruktur kann zumindest ein Drahtgestrick oder zumindest ein Drahtgewebe umfassen.

Das Abgaselement 20 und der Sensor 18, aber auch vorzugsweise der SCR-Katalysator 12, können insbesondere in einer Umlenkgehäusekonstruktion (z. B. einer Gehäusebox) T zum insbesondere mehrfachen Umlenken des Abgases angeordnet sein, wobei das Abgaselement 20 und der Sensor 18 zweckmäßig in der Umlenk- und/oder Ausgangskammer 28 der Umlenkgehäusekonstruktion T angeordnet sind.

Die Umlenkgehäusekonstruktion T kann in einem bevorzugten Ausführungsbeispiel ausgebildet sein, um das Abgas nach Austritt aus dem Abgaselement 20 um z. B. über 270° umlenken zu können.

Stromab des Abgaselements 20 weist die Umlenkgehäusekonstruktion T eine Kollisionswand C auf, gegen die das Abgas aus dem Abgaselement 20 kollidieren und in Richtung Sensor 18 umgelenkt werden kann.

Der Sensor 18 ist innerhalb der Umlenkgehäusekonstruktion T und zwar insbesondere an oder in der Ausgangs- und/oder Umlenkkammer 28 an einer Position angeordnet, an der das Abgas mittels der Umlenkgehäusekonstruktion T bereits umgelenkt wurde, vorzugsweise um zumindest im Wesentlichen 90°.

Ein Einlassquerschnitt der Umlenkgehäusekonstruktion T ist vorzugsweise größer als ein Auslassquerschnitt der Umlenkgehäusekonstruktion T, wobei ein Strömungsquerschnitt der Umlenkgehäusekonstruktion T und zwar insbesondere ein Strömungsquerschnitt der Ausgangs- und/oder Umlenkkammer 28 sich zum Sensor 18 hin verjüngen kann.

Das Abgaselement 20 ist vorzugsweise ausgebildet, um die Durchmischung und/oder Homogenisierung des Abgases während des Durchströmens des Abgaselements 20 und somit zweckmäßig bereits innerhalb des Abgaselements 20 auszuführen, z. B. so, dass die Durchmischung und/oder Homogenisierung am Austritt des Abgaselements 20 zumindest im Wesentlichen abgeschlossen sein kann.

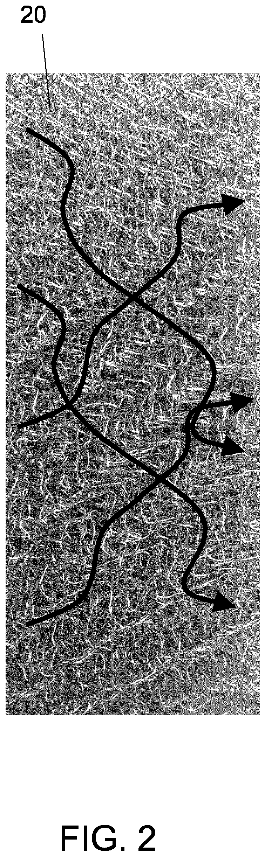

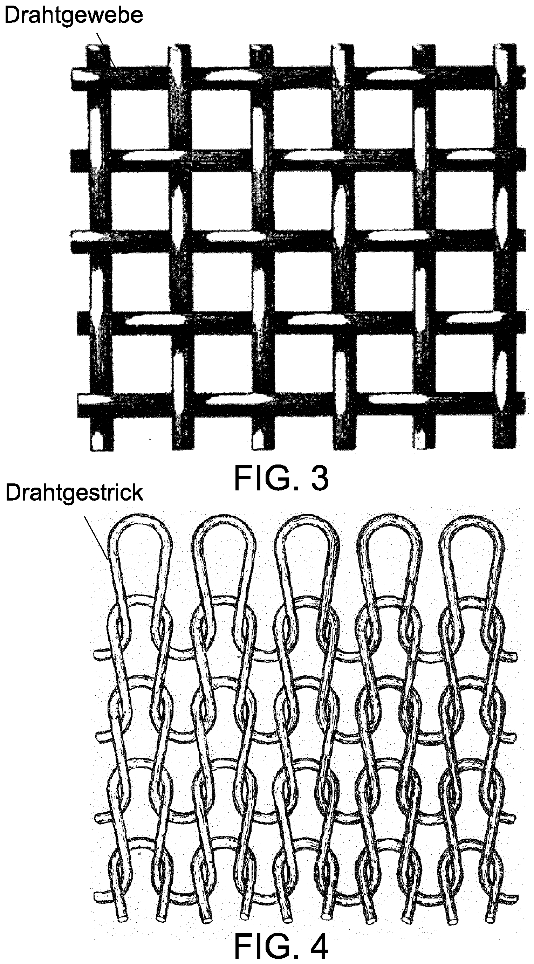

Figur 2 zeigt einen Ausschnitt eines Abgaselements 20 aus Drahtgestrick gemäß einem Ausführungsbeispiel der Erfindung. Figur 3 zeigt einen Ausschnitt eines Drahtgewebes zur Ausbildung eines Abgaselements 20 gemäß einem Ausführungsbeispiel der Erfindung.

Umfasst die Drahtstruktur ein Drahtgestrick, so können Drahtabschnitte des Drahtgestricks in Wirrlage und hintereinander kreuzend angeordnet sein, sodass das Abgas während der Durchströmung des Abgaselements 20 mehrfach, vorzugsweise in allen drei Raumrichtungen, umgelenkt und somit effektiv verwirbelt und/oder durchmischt werden kann.

Umfasst die Drahtstruktur ein Drahtgewebe, so können vorzugsweise zumindest zwei Lagen eines Drahtgewebes z.B. hintereinander angeordnet werden, sodass deren Drahtabschnitte sich kreuzen, wodurch das Abgas während der Durchströmung des Abgaselements 20 mehrfach umgelenkt und somit effektiv verwirbelt und/oder durchmischt und homogenisiert werden kann.

Figur 4 zeigt einen Ausschnitt eines Drahtgestricks zur Ausbildung eines Abgaselements 20 gemäß einem Ausführungsbeispiel der Erfindung. Das Drahtgestrick ist zumindest abschnittsweise aus einem einzigen Draht, vorzugsweise einem einzigen Metalldraht, gestrickt.

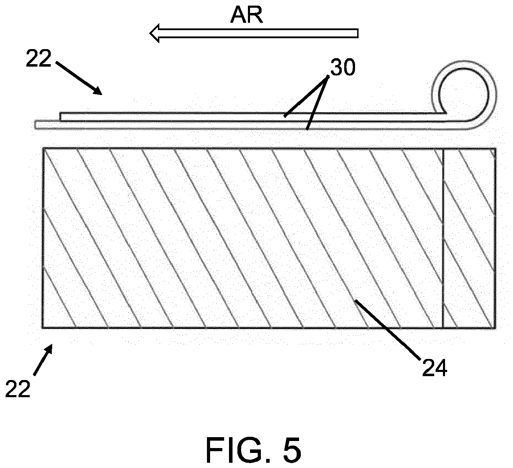

Figur 5 zeigt Ansichten eines Bands 22 zur Ausbildung des Abgaselements 20 gemäß einem Ausführungsbeispiel der Erfindung, wobei in Figur 5 oben eine Seitenansicht und in Figur 5 unten eine zugehörige Draufsicht des Bands 22 dargestellt ist. Das Band 22 kann zweckmäßig aus einem Drahtgewebe oder aus einem Drahtgestrick ausgebildet sein.

Das Abgaselement 20 kann insbesondere durch Aufrollen (Aufwickeln) des Bands 22 hergestellt werden.

Auf das Band 22 ist eine Prägung 24 aufgebracht, die relativ zur Aufrollrichtung AR des Bands 22 schräg und/oder nicht senkrecht ausgerichtet ist. Die Prägung 24 sollte nicht senkrecht zur Aufrollrichtung AR ausgerichtet sein, weil ansonsten beim Aufrollen des Bands 22 Prägeerhöhungen nachteilig ineinander fallen können.

Figur 5 illustriert ein Aufrollen des Bands 22 im Gegenschlag, so dass zumindest zwei übereinander gelegte Lagen 30 des Bands 22 gemeinsam aufgerollt werden. Bei der Ausbildung des Abgaselements 20 im Gegenschlag wird das Band 22 insbesondere auf zweckmäßig ungefähr halber Länge zurückgeschlagen, wobei die daraus resultierenden Lagen 30 dann gemeinsam aufgerollt werden.

Im aufgerollten Zustand weist das Band 22 und somit das Abgaselement 20 einzelne Lagen auf, wobei die einzelnen Lagen Prägungen 24 mit unterschiedlicher, insbesondere entgegengesetzter Ausrichtung aufweisen können. Dadurch können Prägeerhöhungen nicht mehr ineinander fallen, was zu einer im Wesentlichen gleichmäßigen Dichte und einer im Wesentlichen homogenen Struktur des Abgaselements 20 beiträgt.

Für eine erhöhte Stabilität bei insbesondere relativ breiten Bändern 22 kann die Prägung 24 auch andere Muster aufweisen, z.B. im Wesentlichen V-förmig (insbesondere Pfeilförmig) oder W-förmig ausgeführt sein.

Bei einem Aufwickeln im Gleichschlag wird das Band 22 hingegen einlagig von einem Ende her aufgerollt. Prägungen 24 einzelner Lagen weisen dann die gleiche Ausrichtung auf. Prägeerhöhungen können somit nachteilig ineinander fallen.

Ein Abgaselement 20 aus Drahtgestrick kann insbesondere wie folgt ausgebildet werden: Das Drahtgestrick wird in Form eines Drahtgestrick-Schlauchs zur Verfügung gestellt. Der Drahtgestrick-Schlauch wird zunächst zu einem Band 22 flach gedrückt und geprägt, woraufhin das Band 22 z.B. nach dem in Figur 5 gezeigten Prinzip zur Ausbildung des Abgaselements 20 aufgerollt werden kann.

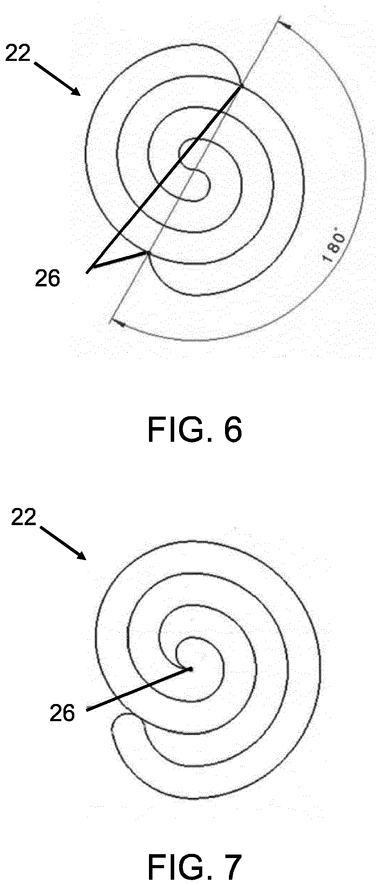

Figur 6 zeigt eine Ansicht eines aufgerollten Bands 22 zur Ausbildung eines Abgaselements 20 gemäß einem Ausführungsbeispiel der Erfindung.

Bei dem in Figur 6 gezeigten Ausführungsbeispiel sind zwei offene Enden 26 des Bands 22 im Wesentlichen zentral innerhalb des aufgerollten Bands 22 angeordnet, so dass das Mischelement 22 einen unsymmetrischen Randbereich aufweist. Obwohl das Abgaselement 20 für eine im Wesentlichen homogene Stickoxidverteilung über einen Großteil des Querschnitts des Ausgangs 16 sorgt, kann im Randbereich des Abgaselements 20 und somit im Randbereich des Querschnitts des Ausgangs 16 eine inhomogene Stickoxidverteilung vorliegen.

Um einen im Wesentlichen homogenen und/oder symmetrischen Aufbau auch im Randbereich des Abgaselements 20 zu erhalten, können z. B. dessen offene Enden vorzugsweise außen versetzt angeordnet sein, z. B. um im Wesentlichen 180° (+/- 25° oder +/- 10°).

Figur 7 zeigt eine Ansicht eines aufgerollten Bands 22 zur Ausbildung eines Abgaselements 20 gemäß einem Ausführungsbeispiel der Erfindung.

Bei dem in Figur 7 gezeigten Ausführungsbeispiel sind zwei offene Enden 26 des Bands 22 an Außenseiten des aufgerollten Bands 22 angeordnet und zwar um im Wesentlichen 180° versetzt zueinander, so dass das Abgaselement 20 einen symmetrischen Randbereich aufweist, was zu einer Erhöhung der Homogenität der Stickoxidverteilung über den Querschnitt des Ausgangs 16 beiträgt.

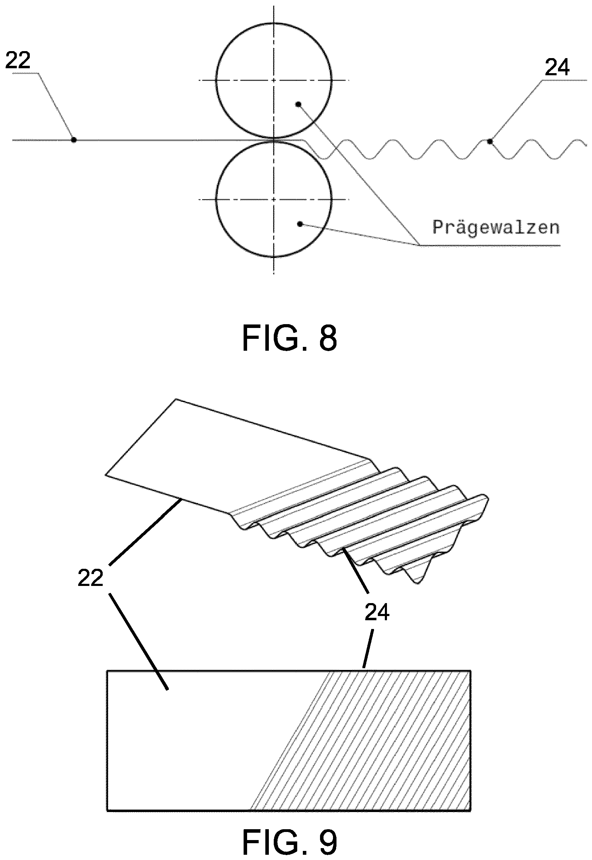

Figur 8 illustriert ein Verfahren zur Herstellung einer Prägung 24 auf ein Band 22 für ein Abgaselement 20 gemäß einem Ausführungsbeispiel der Erfindung. Das Band 22 wird zur Herstellung der Prägung 24 durch zwei Prägewalzen befördert.

Die Drahtstruktur, also insbesondere das Gestrick, wird zumeist im Rundstrickverfahren als Schlauch erzeugt. Der Schlauch wird beim Austritt aus der Strickmaschine zu einem Band 22 flach gedrückt. Wird alternativ ein Flachstrickverfahren verwendet, entfällt dieser Schritt und das Gestrick liegt sofort als flaches Band 22 vor. Dieses Band 22 läuft nun durch zwei Prägewalzen, auf deren Oberflächen eine Prägestruktur aufgebracht ist, z. B. eine schräge, V- oder W-förmige Wellenstruktur. Dem Band 22 wird dadurch z. B. eine schräge, V- oder W-förmige Prägung 24 (Wellung) eingeprägt. Durch den Abstand der Prägewalzen zueinander kann die Tiefe der Prägung 24 eingestellt werden.

Figur 9 zeigt oben eine perspektivische Ansicht und unten eine Draufsicht auf ein Band 22 für ein Abgaselement 20, wobei das Band 22 eine Schräg-Prägung 24 aufweist.

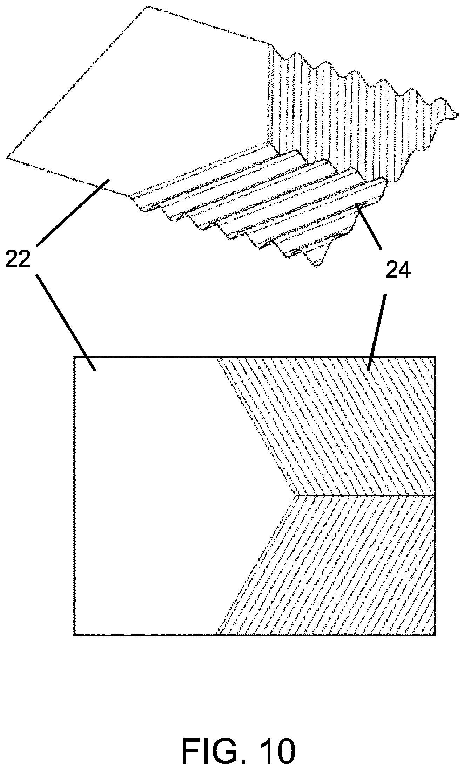

Figur 10 zeigt oben eine perspektivische Ansicht und unten eine Draufsicht auf ein Band 22 für ein Abgaselement 20, wobei das Band 22 eine V-Prägung 24 aufweist.

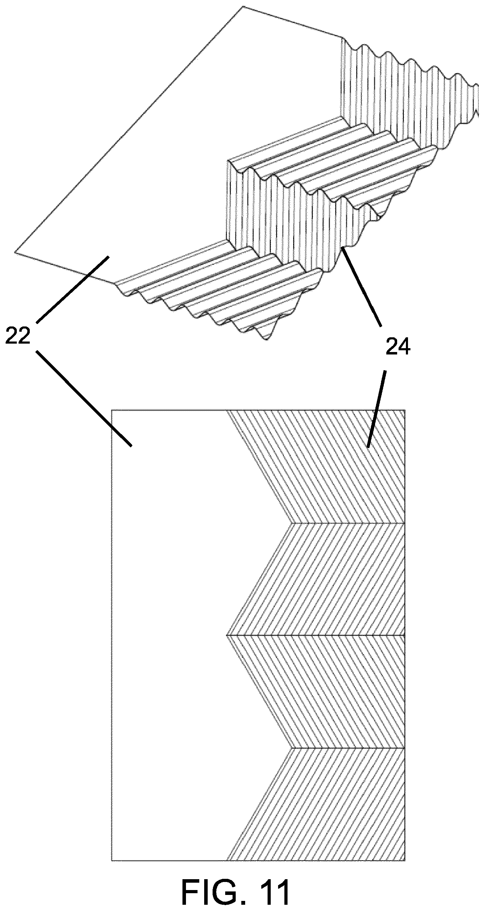

Figur 11 zeigt oben eine perspektivische Ansicht und unten eine Draufsicht auf ein Band 22 für ein Abgaselement 20, wobei das Band 22 eine W-Prägung 24 aufweist. Eine W-Prägung 24 umfasst somit vorzugsweise zumindest zwei V-Prägungen.

Durch die Erfindung kann insbesondere eine vorzugsweise im Wesentlichen ideale homogene Stickoxidverteilung vor dem Sensor 18 erzielt werden.

Der durch das Abgaselement 20 verursachte Druckverlust ist im Vergleich zum Druckverlust in der gesamten Abgasnachbehandlungsvorrichtung 10 relativ gering.

Durch die einfache Integration des Abgaselements 20 können bereits vorhandene Ausführungen von Abgasnachbehandlungsvorrichtungen leicht um ein solches Abgaselement 20 erweitert werden.

Die Eigenschaften des Abgaselements 20 können vor allem bestimmt werden durch die geometrischen Abmessungen, Drahtstärke, Drahtdichte, Wicklungsart, Maschenanzahl des Gestricks oder Rastermaß des Gewebes, Prägeart und Prägetiefe, Länge des Abgaselements 20, etc.. Über einen oder mehrere dieser Parameter können Druckverlust und Stärke der Durchmischung des Abgasstroms zweckmäßig angepasst werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls in den Schutzbereich der nachfolgenden Ansprüche fallen.

### Bezugszeichenliste

- 10: Abgasnachbehandlungsvorrichtung
- T: Umlenkgehäusekonstruktion
- C: Kollisionswand
- 12: SCR-Katalysator
- 14: Eingang des SCR-Katalysators
- 16: Ausgang des SCR-Katalysators
- 18: Sensor, vorzugsweise Stickoxidsensor
- 20: Abgaselement, vorzugsweise Abgasmisch-/ und/oder Abgashomogenisierungselement
- 22: Band zur Ausbildung des Mischelements
- 24: Prägung
- 26: Offene Enden des Bands
- 28: Umlenk- und/oder Ausgangskammer
- 30: Lagen des Bands
- AR: Aufrollrichtung
- P: Strömungsrichtung des Abgases

## Patentansprüche

1. Abgasnachbehandlungsvorrichtung (10), vorzugsweise zur Reduzierung von Stickoxidemissionen in Abgas, umfassend:
einen SCR-Katalysator (12);
einen Sensor (18) stromab des SCR-Katalysators (12), vorzugsweise einen Stickoxidsensor (18), insbesondere zur Bestimmung einer Stickoxidkonzentration; und
ein Abgaselement (20) zur Durchmischung und/oder Homogenisierung von Abgas, vorzugsweise Abgas, das bereits durch den SCR-Katalysator (12) behandelt wurde;
**dadurch gekennzeichnet, dass**
das Abgaselement (20) zwischen dem SCR-Katalysator (12) und dem Sensor (18) angeordnet ist und eine Drahtstruktur umfasst, wobei zur Ausbildung des Abgaselements (20) die Drahtstruktur ein aufgerolltes Band (22) aus Drahtgestrick oder Drahtgewebe umfasst.

2. Abgasnachbehandlungsvorrichtung (10) nach Anspruch 1, **dadurch gekennzeichnet, dass** das Abgaselement (20) ausgebildet ist, um eine Inhomogenität einer Stickoxidverteilung im Abgas zu homogenisieren oder zumindest zu reduzieren.

3. Abgasnachbehandlungsvorrichtung (10) nach Anspruch 1 oder 2, **dadurch gekennzeichnet, dass** das Abgaselement (20) in und/oder unmittelbar an einem Ausgang (16) des SCR-Katalysators (12) angeordnet ist und/oder einen Strömungsquerschnitt des Ausgangs (16) des SCR-Katalysators (12) zumindest teilweise, vorzugsweise im Wesentlichen vollständig, ausfüllt.

4. Abgasnachbehandlungsvorrichtung (10) nach einem der vorhergehenden Ansprüche, **dadurch gekennzeichnet, dass** die Drahtstruktur zumindest ein, vorzugsweise aus einem Metalldraht gestricktes, Drahtgestrick oder zumindest ein Drahtgewebe umfasst.

5. Abgasnachbehandlungsvorrichtung (10) nach einem der vorhergehenden Ansprüche, **dadurch gekennzeichnet, dass** ein Drahtgestrick-Schlauch zu einem Band (22) flach gedrückt ist und das Band (22) aufgerollt ist, um das Abgaselement (20) auszubilden.

6. Abgasnachbehandlungsvorrichtung (10) nach einem der vorhergehenden Ansprüche, **dadurch gekennzeichnet, dass** auf das Band (22) eine Prägung (24) aufgebracht ist und vorzugsweise die Prägung (24) relativ zu einer Aufrollrichtung (AR) des Bands (22) schräg und/oder nicht senkrecht ausgerichtet ist und/oder die Prägung (24) ein Schräg-, Pfeil-, V- oder W-Muster ausbildet.

7. Abgasnachbehandlungsvorrichtung (10) nach einem der vorhergehenden Ansprüche, **dadurch gekennzeichnet, dass** das das Abgaselement (20) eine gleichmäßige Dichte und/oder eine homogene Struktur aufweist.

8. Abgasnachbehandlungsvorrichtung (10) nach einem der vorhergehenden Ansprüche , **dadurch gekennzeichnet, dass**
- das Band (22) im Gegenschlag aufgerollt ist, vorzugsweise so, dass zumindest zwei übereinander angeordnete Lagen des Bands (22) gemeinsam aufgerollt sind, und/oder
- das Band (22) im aufgerollten Zustand einzelne Lagen bildet und die einzelnen Lagen unterschiedlich und/oder entgegengesetzt ausgerichtete Prägungen (24) aufweisen.

9. Abgasnachbehandlungsvorrichtung (10) nach einem der vorhergehenden Ansprüche, **dadurch gekennzeichnet, dass** im aufgerollten Zustand des Bands (22)
- zwei offene Enden (26) des Bands (22) an Außenseiten des Bands (22) angeordnet sind, vorzugsweise um 180° +/-40°, +/-30° oder +/-20° versetzt zueinander, oder
- zwei offene Enden (26) des Bands (22) vorzugsweise zentral innerhalb des Bands (22) angeordnet sind.

10. Abgasnachbehandlungsvorrichtung (10) nach einem der Ansprüche 4 bis 9, **dadurch gekennzeichnet, dass**
- Drahtabschnitte des Drahtgestricks in Wirrlage und/oder hintereinander kreuzend angeordnet sind, so dass vorzugsweise das Abgas während der Durchströmung des Abgaselements (20) mehrfach umgelenkt wird, oder
- Drahtabschnitte zumindest zweier Drahtgewebelagen hintereinander kreuzend angeordnet sind, so dass vorzugsweise das Abgas während der Durchströmung des Abgaselements (20) mehrfach umgelenkt wird.

11. Abgasnachbehandlungsvorrichtung (10) nach einem der vorhergehenden Ansprüche, **dadurch gekennzeichnet, dass** das Abgaselement (20), der Sensor (18) und/oder der SCR-Katalysator (12) in einer Umlenkgehäusekonstruktion (T) zum Umlenken des Abgases angeordnet ist.

12. Abgasnachbehandlungsvorrichtung (10) nach Anspruch 11, **dadurch gekennzeichnet, dass**
- das Abgaselement (20) und/oder der Sensor (18) in einer Ausgangs- und/oder Umlenkkammer (28) der Umlenkgehäusekonstruktion (T) angeordnet ist und vorzugsweise die Ausgangs- und/oder Umlenkkammer (28) an den Ausgang (16) des SCR-Katalysator (12) anschließt, und/oder
- die Umlenkgehäusekonstruktion (T) ausgebildet ist, um das Abgas um zumindest 160°, zumindest 170°, zumindest 180°, zumindest 190°, zumindest 240°, zumindest 250°, zumindest 260° oder zumindest 270° umzulenken.

13. Abgasnachbehandlungsvorrichtung (10) nach einem der Ansprüche 11 bis 12, **dadurch gekennzeichnet, dass**
- die Umlenkgehäusekonstruktion (T) stromab des Abgaselements (20) eine Kollisionswand (C) aufweist, gegen die das Abgas aus dem Abgaselement (20) kollidiert und in Richtung Sensor (18) umgelenkt wird, und/oder
- der Sensor (18) an einer Position angeordnet ist, an der das Abgas mittels der Umlenkgehäusekonstruktion (T) bereits umgelenkt wurde, vorzugsweise um zumindest im Wesentlichen 90°.

14. Abgasnachbehandlungsvorrichtung (10) nach einem der Ansprüche 11 bis 13, **dadurch gekennzeichnet, dass**
- ein Abgas-Einlassquerschnitt der Umlenkgehäusekonstruktion (T) größer ist als ein Abgas-Auslassquerschnitt der Umlenkgehäusekonstruktion (T), und/oder
- ein Strömungsquerschnitt der Umlenkgehäusekonstruktion (T) sich zum Sensor (18) hin verjüngt.

15. Abgasnachbehandlungsvorrichtung (10) nach einem der Ansprüche 3 bis 14, **dadurch gekennzeichnet, dass** das Abgaselement (20) im Wesentlichen koaxial zum Ausgang (16) des SCR-Katalysators (12) angeordnet ist.

16. Abgasnachbehandlungsvorrichtung (10) nach einem der vorhergehenden Ansprüche, **dadurch gekennzeichnet, dass** das Abgaselement (20) ausgebildet ist, um die Durchmischung und/oder Homogenisierung des Abgases innerhalb des Abgaselements (20) und während des Durchströmens des Abgaselements (20) auszuführen, so dass vorzugsweise das Abgas bereits am Austritt des Abgaselements (20) ausreichend durchmischt und/oder homogenisiert ist.

17. Kraftfahrzeug, vorzugsweise Nutzfahrzeug, mit einer Abgasnachbehandlungsvorrichtung (10) nach einem der Ansprüche 1 bis 16.

## Claims

1. An exhaust-gas aftertreatment device (10), preferably for reducing nitrogen oxide emissions in exhaust gas, comprising:
a SCR catalytic converter (12);
a sensor (18) downstream of the SCR catalytic converter (12), preferably a nitrogen oxide sensor (18), in particular for determining a concentration of nitrogen oxide; and
an exhaust gas element (20) for mixing and/or homogenizing exhaust gas, preferably exhaust gas which has already been treated by the SCR catalytic converter (12);
**characterized in that**
the exhaust gas element (20) is arranged between the SCR catalytic converter (12) and the sensor (18) and comprises a wire structure, wherein the wire structure comprises a rolled-up strip (22) of weft-knitted wire or woven wire for forming the exhaust gas element (20).

2. The exhaust gas aftertreatment device (10) according to Claim 1, **characterized in that** the exhaust gas element (20) is designed to homogenize an inhomogeneous nitrogen oxide distribution, or at least reduce an inhomogeneity of a nitrogen oxide distribution, in the exhaust gas.

3. The exhaust gas aftertreatment device (10) according to Claim 1 or 2, **characterized in that** the exhaust gas element (20) is arranged in and/or directly at an outlet (16) of the SCR catalytic converter (12) and/or at least partially, preferably substantially completely fills a flow cross section of the outlet (16) of the SCR catalytic converter (12).

4. The exhaust gas aftertreatment device (10) according to one of the preceding claims, **characterized in that** the wire structure comprises at least one weft-knitted wire preferably knitted from a metal wire or comprises at least one woven wire.

5. The exhaust gas aftertreatment device (10) according to one of the preceding claims, **characterized in that** a weft-knitted wire tube is pressed flat to form a strip (22) and the strip (22) is rolled up in order to form the exhaust gas element (20).

6. The exhaust gas aftertreatment device (10) according to one of the preceding claims, **characterized in that** an embossing (24) is applied to the strip (22) and the embossing (24) is preferably aligned obliquely and/or not perpendicularly relative to a roll-up direction (AR) of the strip (22) and/or the embossing (24) forms an oblique, arrow-shaped, V-shaped or W-shaped pattern.

7. The exhaust gas aftertreatment device (10) according to one of the preceding claims, **characterized in that** the exhaust gas element (20) has a uniform density and/or a homogeneous structure.

8. The exhaust gas aftertreatment device (10) according to one of the preceding claims, **characterized in that**
- the strip (22) is rolled up twist against twist, preferably such that at least two layers of the strip (22) that are arranged one on top of another are rolled up together, and/or
- the strip (22) in the rolled-up state forms individual layers and the individual layers have differently and/or oppositely aligned embossings (24) .

9. The exhaust gas aftertreatment device (10) according to one of the preceding claims, **characterized in that**, in the rolled-up state of the strip (22),
- two open ends (26) of the strip (22) are arranged on outer sides of the strip (22), preferably offset from one another by 180° +/-40°, +/-30° or +/-20°, or
- two open ends (26) of the strip (22) are preferably arranged centrally inside the strip (22) .

10. The exhaust gas aftertreatment device (10) according to one of Claims 4 to 9, **characterized in that**
- wire portions of the weft-knitted wire are arranged randomly and/or crossing one behind another, with the result that the exhaust gas is preferably diverted repeatedly as it flows through the exhaust gas element (20),
- wire portions of at least two woven wire layers are arranged crossing one behind another, with the result that the exhaust gas is preferably diverted repeatedly as it flows through the exhaust gas element (20).

11. The exhaust gas aftertreatment device (10) according to one of the preceding claims, **characterized in that** the exhaust gas element (20), the sensor (18) and/or the SCR catalytic converter (12) is arranged in a diverting housing structure (T) for diverting the exhaust gas.

12. The exhaust gas aftertreatment device (10) according to Claim 11, **characterized in that**
- the exhaust gas element (20) and/or the sensor (18) is arranged in an outlet chamber and/or diverting chamber (28) of the diverting housing structure (T) and the outlet chamber and/or diverting chamber (28) preferably adjoins the outlet (16) of the SCR catalytic converter (12), and/or
- the diverting housing structure (T) is designed to divert the exhaust gas by at least 160°, at least 170°, at least 180°, at least 190°, at least 240°, at least 250°, at least 260° or at least 270°.

13. The exhaust gas aftertreatment device (10) according to either of Claims 11 and 12, **characterized in that**
- downstream of the exhaust gas element (20), the diverting housing structure (T) has a collision wall (C) against which the exhaust gas from the exhaust gas element (20) collides, the exhaust gas then being diverted towards the sensor (18), and/or
- the sensor (18) is arranged at a position where the exhaust gas has already been diverted by the diverting housing structure (T), preferably by at least substantially 90°.

14. The exhaust gas aftertreatment device (10) according to one of Claims 11 to 13, **characterized in that**
- an exhaust gas inlet cross section of the diverting housing structure (T) is larger than an exhaust gas outlet cross section of the diverting housing structure (T), and/or
- a flow cross section of the diverting housing structure (T) tapers towards the sensor (18).

15. The exhaust gas aftertreatment device (10) according to one of Claims 3 to 14, **characterized in that** the exhaust gas element (20) is substantially coaxial with the outlet (16) of the SCR catalytic converter (12).

16. The exhaust gas aftertreatment device (10) according to one of the preceding claims, **characterized in that** the exhaust gas element (20) is designed to mix and/or homogenize the exhaust gas inside the exhaust gas element (20) while the exhaust gas is flowing through the exhaust gas element (20), with the result that the exhaust gas preferably is already sufficiently mixed and/or homogenized at the outlet of the exhaust gas element (20) .

17. A motor vehicle, preferably a utility vehicle, comprising an exhaust gas aftertreatment device (10) according to one of Claims 1 to 16.

## Revendications

1. Dispositif de post-traitement de gaz d'échappement (10), de préférence pour réduire les émissions d'oxyde d'azote dans le gaz d'échappement, comprenant :
un catalyseur SCR (12) ;
un capteur (18) en aval du catalyseur SCR (12), de préférence un capteur d'oxyde d'azote (18), notamment pour déterminer une concentration d'oxyde d'azote ; et
un élément d'échappement (20) pour mélanger et/ou homogénéiser le gaz d'échappement, de préférence le gaz d'échappement qui a déjà été traité par le catalyseur SCR (12) ;
**caractérisé en ce que**
l'élément d'échappement (20) est agencé entre le catalyseur SCR (12) et le capteur (18) et comprend une structure métallique ; pour former l'élément d'échappement (20), la structure métallique comprenant une bande enroulée (22) de tricot métallique ou de tissu métallique.

2. Dispositif de post-traitement de gaz d'échappement (10) selon la revendication 1, **caractérisé en ce que** l'élément d'échappement (20) est configuré pour homogénéiser ou au moins réduire une inhomogénéité d'une distribution d'oxyde d'azote dans le gaz d'échappement.

3. Dispositif de post-traitement de gaz d'échappement (10) selon la revendication 1 ou 2, **caractérisé en ce que** l'élément d'échappement (20) est agencé dans et/ou directement à une sortie (16) du catalyseur SCR (12) et/ou remplit au moins partiellement, de préférence essentiellement complètement, une section transversale d'écoulement de la sortie (16) du catalyseur SCR (12).

4. Dispositif de post-traitement de gaz d'échappement (10) selon l'une quelconque des revendications précédentes, **caractérisé en ce que** la structure métallique comprend au moins un tricot métallique ou au moins un tissu métallique, de préférence tricoté à partir d'un fil métallique.

5. Dispositif de post-traitement de gaz d'échappement (10) selon l'une quelconque des revendications précédentes, **caractérisé en ce qu'**un tube en fil tricoté est aplati en une bande (22) et la bande (22) est enroulée pour former l'élément d'échappement (20).

6. Dispositif de post-traitement de gaz d'échappement (10) selon l'une quelconque des revendications précédentes, **caractérisé en ce qu'**un gaufrage (24) est appliqué sur la bande (22) et, de préférence, le gaufrage (24) est orienté de manière oblique et/ou non perpendiculaire par rapport à une direction d'enroulement (AR) de la bande (22) et/ou le gaufrage (24) forme un motif oblique, une flèche, un V ou un W.

7. Dispositif de post-traitement de gaz d'échappement (10) selon l'une quelconque des revendications précédentes, **caractérisé en ce que** l'élément d'échappement (20) présente une densité uniforme et/ou une structure homogène.

8. Dispositif de post-traitement de gaz d'échappement (10) selon l'une quelconque des revendications précédentes, **caractérisé en ce que**
- la bande (22) est enroulée en sens inverse, de préférence de telle sorte qu'au moins deux couches superposées de la bande (22) sont enroulées ensemble, et/ou
- la bande (22) forme des couches individuelles à l'état enroulé et les couches individuelles présentent des gaufrages (24) orientés différemment et/ou en sens opposé.

9. Dispositif de post-traitement de gaz d'échappement (10) selon l'une quelconque des revendications précédentes, **caractérisé en ce qu'**à l'état enroulé de la bande (22),
- deux extrémités ouvertes (26) de la bande (22) sont agencées sur des côtés extérieurs de la bande (22), de préférence décalées de 180° +/- 40°, +/- 30° ou +/-20° l'une par rapport à l'autre, ou
- deux extrémités ouvertes (26) de la bande (22) sont agencées de préférence de manière centrale à l'intérieur de la bande (22).

10. Dispositif de post-traitement de gaz d'échappement (10) selon l'une quelconque des revendications 4 à 9, **caractérisé en ce que**
- des sections métallique du tissu métallique sont agencées en position entremêlée et/ou en se croisant les unes derrière les autres, de telle sorte que le gaz d'échappement est de préférence dévié plusieurs fois pendant leur passage à travers l'élément d'échappement (20), ou
- des sections métallique d'au moins deux couches de tissu métallique sont agencées en se croisant les unes derrière les autres, de telle sorte que le gaz d'échappement est de préférence dévié plusieurs fois pendant son passage à travers l'élément d'échappement (20) .

11. Dispositif de post-traitement de gaz d'échappement (10) selon l'une quelconque des revendications précédentes, **caractérisé en ce que** l'élément d'échappement (20), le capteur (18) et/ou le catalyseur SCR (12) sont agencés dans une construction de boîtier de déviation (T) pour dévier le gaz d'échappement.

12. Dispositif de post-traitement de gaz d'échappement (10) selon la revendication 11, **caractérisé en ce que**
- l'élément d'échappement (20) et/ou le capteur (18) est agencé dans une chambre de sortie et/ou de déviation (28) de la construction de boîtier de déviation (T) et de préférence la chambre de sortie et/ou de déviation (28) est raccordée à la sortie (16) du catalyseur SCR (12), et/ou
- la construction de boîtier de déviation (T) est configurée pour dévier le gaz d'échappement d'au moins 160°, d'au moins 170°, d'au moins 180°, d'au moins 190°, d'au moins 240°, d'au moins 250°, d'au moins 260° ou d'au moins 270°.

13. Dispositif de post-traitement de gaz d'échappement (10) selon l'une quelconque des revendications 11 à 12, **caractérisé en ce que**
- la construction de boîtier de déviation (T) présente, en aval de l'élément d'échappement (20), une paroi de collision (C) contre laquelle le gaz d'échappement provenant de l'élément d'échappement (20) entre en collision et est dévié en direction du capteur (18), et/ou
- le capteur (18) est agencé à une position à laquelle le gaz d'échappement a déjà été dévié au moyen de la construction de boîtier de déviation (T), de préférence d'au moins essentiellement 90°.

14. Dispositif de post-traitement de gaz d'échappement (10) selon l'une quelconque des revendications 11 à 13, **caractérisé en ce que**
- une section transversale d'entrée de gaz d'échappement de la construction de boîtier de déviation (T) est plus grande qu'une section transversale de sortie de gaz d'échappement de la construction de boîtier de déviation (T), et/ou
- une section transversale d'écoulement de la construction de boîtier de déviation (T) se rétrécit vers le capteur (18).

15. Dispositif de post-traitement de gaz d'échappement (10) selon l'une quelconque des revendications 3 à 14, **caractérisé en ce que** l'élément d'échappement (20) est agencé essentiellement coaxialement à la sortie (16) du catalyseur SCR (12).

16. Dispositif de post-traitement de gaz d'échappement (10) selon l'une quelconque des revendications précédentes, **caractérisé en ce que** l'élément d'échappement (20) est configuré pour réaliser le brassage et/ou l'homogénéisation du gaz d'échappement à l'intérieur de l'élément d'échappement (20) et pendant le passage à travers l'élément d'échappement (20), de telle sorte que, de préférence, le gaz d'échappement est déjà suffisamment mélangé et/ou homogénéisé à la sortie de l'élément d'échappement (20).

17. Véhicule automobile, de préférence véhicule utilitaire, avec un dispositif de post-traitement de gaz d'échappement (10) selon l'une quelconque des revendications 1 à 16.
